Europäisches Patentamt

European Patent Office

Office européen des brevets

(19)

(11) Publication number: **0 177 548**

**B1**

(12)

# EUROPEAN PATENT SPECIFICATION

(45) Date of publication of patent specification: **14.09.88**

(51) Int. Cl.⁴: **F 16 L 55/04**

(21) Application number: **85901641.2**

(22) Date of filing: **22.03.85**

(86) International application number:
**PCT/SE85/00129**

(87) International publication number:
**WO 85/04463 10.10.85 Gazette 85/22**

(54) **A PULSATION DAMPER FOR ABSORBING PRESSURE PULSATIONS IN A HIGH PRESSURE HYDRAULIC SYSTEM.**

(30) Priority: **28.03.84 SE 8401717**

(43) Date of publication of application:
**16.04.86 Bulletin 86/16**

(45) Publication of the grant of the patent:
**14.09.88 Bulletin 88/37**

(84) Designated Contracting States:
**DE FR GB**

(56) References cited:
**WO-A-80/01376**
**DE-A-1 450 446**
**FR-A-1 536 140**
**US-A- 696 277**
**US-A-2 630 833**
**US-A-2 710 025**

(73) Proprietor: **AB HYDRAULIK CONSULT**
**Box 8080**
**S-163 08 Spanga (SE)**

(72) Inventor: **ALVEN, Jan**
**Spangavägen 365**
**S-163 55 Spanga (SE)**
Inventor: **WADMARK, Bo**
**Pilfinksvägen 3**
**S-430 41 Kullavik (SE)**

(74) Representative: **MacFie, W.R.**
**Albihn West AB Stora Nygatan 15**
**S-411 08 Göteborg (SE)**

Courier Press, Leamington Spa, England.

## Description

Disturbing pressure pulsations can develop within high pressure hydraulic systems, and are usually caused by noise sources like e.g. pumps, hydraulic motors and control devices.

Different arrangements have been proposed for reducing these pressure pulsations, but these have all been either expensive or complicated, not the least because the prevailing high pressure demands fulfillment of construction regulations and prevents the use of damping chambers or containers used for other damping purposes. Very often a short chamber with a noticeable diameter is used, for instance as shown in FR—A—1 536 140. The dimensioning of such a vessel is determined by the internal pressure and the diameter. When this exceeds a certain value, rules governing pressure vessels will have to be applied. Special care must be taken concerning the end walls, which may tend to flutter and thus increase the disturbances.

The dampening presupposes a certain volume, and a reduced diameter may be compensated by an increaesd length.

Standard high-pressure pipes are acceptable for certain maximum pressures, and by selecting a pipe with a diameter below what is regarded as the lower limit for pressure vessels considerable savings are obtainable, even if the length of the vessel will increase.

The object of this invention is to propose a damping device that functions better acoustically than prior dampers in this field, is simple to mount and to use, is suitable for mass production, and is easily adaptable to various amounts of installation space.

A development of the invention further enables a compact joining of damper and pump.

In a damper according to the invention the normal transport pipe from the source of pulses, e.g. a pump in a high pressure hydraulic system, is cut in at least one place, and is replaced by a damper chamber having a larger diameter than the transport pipe, and the invention is characterized in that the damper chamber comprises at least two pipes, pipes having an inner diameter not exceeding 70 mm and being less than the lower limit for pressure vessels and having a length substantially corresponding to one sixth of the wave length of the basic tune in the system in operation, arranged in series and interconnected by a pipe, having a length substantially equal to one quarter of the wave length of the basic tune.

The damper chambers are advantageously located in parallel relationship, the connecting pipe being bent in the space outside the chambers.

The part of the connecting pipe joining a damper chamber preferably continues into the later. The ends of the damper chambers remote from the connecting pipe are closed, and the transport pipe advantageously joins the associated damper chamber substantially at right angle to its longitudinal axis, and at a distance from its closed end.

The invention will now be described in the following and by reference to the accompanying drawings, wherein:

Fig. 1 is a diagram showing the relationship between noise level and frequency within a high pressure hydraulic fluid pipe and

Fig. 2 illustrates one embodiment of the damper according to the invention.

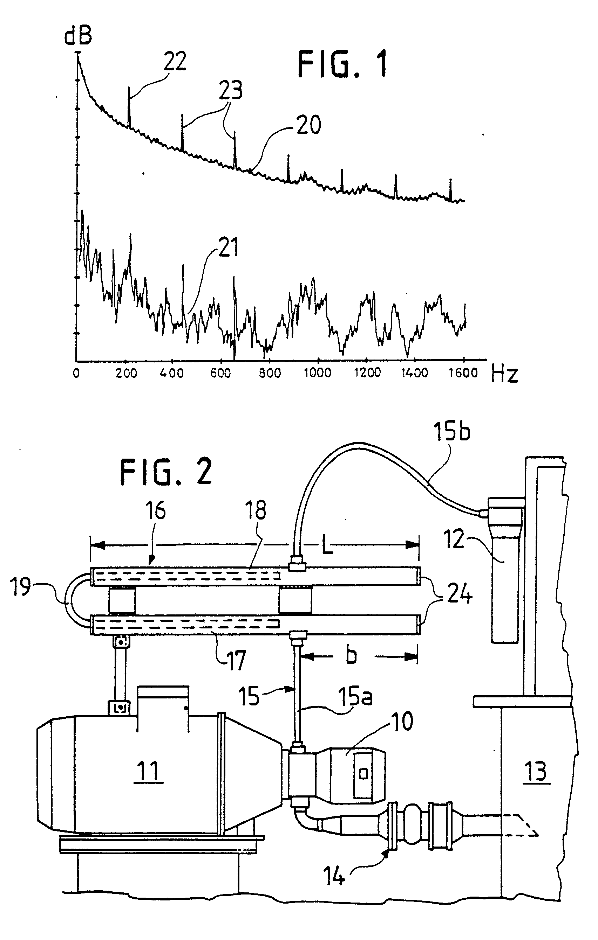

The hydraulic system illustrated in Figure 2 comprises a pump 10 of the axial piston type with several pistons working in parallel, e.g. nine pistons driven by an electric motor 11. The flow from the pump reaches a consumer of fluid pressure, via a filter 12, which is mounted in a frame containing a tank 13 for return fluid from the consumer. The fluid is drawn to the pump 10 via conventional means 14.

A transport pipe 15 extends from the pump to the hydraulic machine via a damping device according to this invention.

The transport pipe 15 is designed for the pressure and flow demanded by the machine, and comprises a middle part 15a between the pump and the damper device and a part 15b between the later and the filter 12. The inner diameter of the pipe can for example be 25 mm.

The damper chamber shall have a bigger diameter than the transport pipe, and it must enclose a certain volume. For cost saving reasons it is advantageous to be able to use a high pressure pipe. The inner diameter thereof must however not exceed 70 mm and be less than the lower limit for what is to be regarded as a pressure vessel. A chamber with bigger diameter and the required volume will be expensive to manufacture, and its end walls may tend to "flutter", making the hydraulic system vibrate longitudinally.

The damper 16 shown, comprises two damper pipes 17 and 18, having an inner diameter of no more than 70 mm. These are connected by means of a long pipe 19, preferably having a slightly less inner diameter than the transport pipe 15. The smaller pipe 19 can easily be bent to any suitable shape, so that the damping pipes 17 and 18 can be suitably located in relation to adjacent components.

If needed, also the damping pipes 17 and 18 can be bent.

The pressure pulses present in a high pressure hydraulic system depend on several factors, e.g. the design and speed of the pump or the machine and the working pressure, and it is evident that the size and design of the damper 16 can be varied in accordance to local circumstances and needs of damping.

Figure 1 illustrates measured noise values in dB for different vibration frequencies, Hz. The upper curve 20 corresponds to values in an undamped system, while the lower curve 21 shows values for a system incorporating a damper according to the invention.

Each throw of the pump axle results in a pressure pulse in the hydraulic fluid with a base frequency 22, but because there are nine pistons working with a certain phase overlap, this means that the resulting signal will be smoothed. Certain peaks 23 do however appear within this signal caused by the compression of the fluid due to the increase in fluid pressure, and subsequent sudden compensation. Primarily these pressure peaks cause the irritating noise, with the base frequency ($f_o$) 22 and its overtunes.

The acoustic velocity within a hydraulic system of steel pipes is about 1350 m/sec for oil, compared to about 350 m/sec in air or gas. The wavelengths will therefore be about four times larger in a hydraulic system, which allows for the use of interference absorption within the damper, if this is made sufficiently long.

As have been mentioned above, the pressure pulsations present in the system depend upon several factors related to design. The length and volume of the damper can therefor vary between wide limits.

An important parameter is the quarter wavelength of the base tone, $\lambda/4$

$$\lambda/4 = \frac{1350}{4 \times f_o}$$

$f_o = 22$ (according to Figure 1).
Example:
$f_o = 200$ Hz gives $\lambda/4 = 1.7$ m.

The length of the connector pipe 19 is selected as about the quarter wavelength.

The length L of one damper pipe 17, 18 is selected as 2/3 of the pipe 19. Alternatively can longer pipes be selected if consideration is taken for a suitable interference effect, so that a good absorption is obtained in the necessary range of frequencies.

At a larger flow than about 400 l/min, longer pipes are selected in order to permit sufficient volumes and still keeping small dimensions in the damper pipes 17 and 18.

The reasons for selecting long pipes are:

1. The internal diameter of the pipes can be kept small, which makes it easy to make a strong design.

2. The muting of interference waves must be as efficacious as possible.

3. Resonances in the pipe-volume-pipe-volume-pipe-system (15a-17-19-18-15b) shall normally lie below the base frequency. Longer pipes will reduce the need of volume, because the frequency is kept constant. During normal dimensioning the lengths used are less than half the quarter wavelength.

The length of the connector pipe 19 can vary in relation to the frequencies which shall be muted and it is not necessary for the ends to reach equally far into the two damper pipes 17, 18.

These ends opposite from the connector pipe 19 are blocked by gable walls 24, against which the waves are reflected at maximum pressure. The connection of the transport pipes 15a, b are made at right angle to the longitudinal axis of the damper pipes, and at a distance "b" from adjacent gable 24, which is selected in relation to expected reflection waves.

In certain cases it may be suitable with more than two damper pipes. One simple arrangement is to double the illustrated embodiment with two damper pipes, i.e. four damper pipes with a very high damping capacity.

In order to reduce the length of the transport pipe part 15a, one end of the damper pipe 17 can be bent and affixed directly to the pump 10. Several location alternatives are possible.

When the flow is small it is possible to divide one damper pipe by means of a partition wall into two chambers interconnected through the partition wall by a small pipe corresponding to the connection pipe 19. This pipe preferably is helically wound to get the desired length into the shorter larger pipe.

Depending on the available space the damper pipes 17, 18 can be arranged at different angles to each other. The bent part of the connection pipe 19 can be partly replaced by a piece of hydraulic hose.

## Claims

1. A pulsation damper for absorbing pressure pulsations from a source of pulses, e.g. a pump (10), in a high pressure hydraulic system, in which the normal transport pipe (15a, 15b) from the source (10) of pulses is cut in at least one place, and is replaced by a damper chamber having a larger diameter than the transport pipe (15), characterized in that the damper chamber (17, 18) comprises at least two pipes having an inner diameter not exceeding 70 mm and being less than the lower limit for pressure vessels and having a length substantially corresponding to one sixth of the wave length of the basic tune in the system, in operation, arranged in series and interconnected by a pipe (19), having a length substantially equal to one quarter of the wave length of the basic tune.

2. A damper according to claim 1 characterized in that the damper chambers (17, 18) are located in parallel relationship, the connecting pipe (19) being bent in the space outside the chambers.

3. A damper according to either of claims 1 or 2 characterized in that the part of the connecting pipe (19) joining a damper chamber (17) continues into the later.

4. A damper according to any of the preceeding claims characterized in that the ends of the damper chambers (17, 18) remote from the connecting pipe (19) are closed and that the transport pipe (19) joins the associated damper chambers (17, 18) substantially at right angle to its longitudinal axis, and at a distance (b) from its closed end.

## Patentansprüche

1. Pulsationsdämpfer zur Absorption von Druckschwankungen von einer Impulsquelle, z.B. einer Pumpe (10), in einem Hochdruck-Hydrauliksystem, in dem die übliche Förderleitung (15a, 15b) von der Impulsquelle (10) an wenigstens einer Stelle aufgetrennt und durch eine Dämpferkammer mit einem gegenüber der Förderleitung (15) größeren Durchmesser ersetz ist, dadurch gekennzeichnet, daß die Dämpferkammer (17, 18) wenigstens zwei Rohre mit einem Durchmesser, der 70 mm nicht überschreitet sowie geringer ist als der untere Grenzwert für Druckgefäße, und mit einer Länge, die im wesentlichen einem Sechstel der Wellenlänge der Grundfrequenzabstimmung im System im Betrieb entspricht, welche in Reihe geschaltet sowie durch eine Röhre (19) untereinander verbunden sind, deren Länge im wesentlichen gleich einem Viertel der Wellenlänge der Grundfrequenzabstimmung ist, umfaßt.

2. Dämpfer nach Anspruch 1, dadurch gekennzeichnet, daß die Dämperkammern (17, 18) in paralleler Lagebeziehung angeordnet sind und die Verbindungsröhre (19) im Raum außerhalb der Kammern gebogen ist.

3. Dämpfer nach Anspruch 1 oder 2, dadurch gekennzeichnet, daß der an eine Kammer (17) angeschlossene Teil der Verbindungsröhre (19) sich in diese fortsetzt.

4. Dämpfer nach einem der vorhergehenden Ansprüche, dadurch gekennzeichnet, daß die von der Verbindungsröhre (19) entfernt gelegenen Enden der Dämpferkammern (17, 18) verschlossen sind und die Förderleitung (15) an die zugeordneten Dämpferkammern (17, 18) im wesentlichen im rechten Winkel zu deren Längsachse sowie mit einem Abstand (b) von deren geschlossenem Ende angeschlossen ist.

**Revendications**

1. Un atténuateur de pulsations pour absorber des pulsations de pression d'une source de pulsations par exemple d'une pompe (10), dans un système hydraulique à pression élevée, dans lequel le tuyau normal (15a, 15b) de transport de la source (10) des pulsations est coupé en au moins un endroit, et est remplacé par une chambre d'atténuation ayant un diamètre plus grand que le tuyau de transport (15), caractérisé en ce que la chambre d'atténuation (17, 18) comprend au moins deux tuyaux ayant un diamètre intérieur n'excédant pas 70 mm et moindre que la limite inférieure pour enceinte sous pression et ayant une longueur correspondant sensiblement à un sixième de la longueur d'onde du ton de base du système en fonctionnement disposés en série et interconnectés par un tuyau (19) ayant une longueur sensiblement égale à un quart de la longueur d'onde du ton de base.

2. Un atténuateur selon la revendication 1, caractérisé en ce que les chambres d'atténuation (17, 18) sont placées en parallèle, le tuyau de liaison (19) étant courbé dans l'espace extérieur aux chambres.

3. Un atténuateur selon l'une des revendications 1 ou 2, caractérisé en ce que la partir du tuyau de liaison (19) joignant une chambre d'atténuation (17) se prolonge dans cette dernière.

4. Un atténuateur selon n'importe laquelle des revendications précédentes, caractérisé en ce que les extrémités des chambres d'atténuation (17, 18) qui sont éloignées du tuyau de liaison (19) sont fermées et en ce que le tuyau de transport (19) joint la chambre d'atténuation associée (17, 18) sensiblement à angle droit de son axe longitudinal et à une distance (b) de son extrémité fermée.

FIG. 1

FIG. 2